(19) Europäisches Patentamt

European Patent Office

Office européen des brevets

(11) **EP 1 067 530 A2**

(12) **EUROPEAN PATENT APPLICATION**

(43) Date of publication:
**10.01.2001 Bulletin 2001/02**

(51) Int. Cl.$^7$: **G11B 7/135**, G02B 13/24

(21) Application number: **00114312.2**

(22) Date of filing: **04.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.07.1999 JP 19525799**

(71) Applicant: **KONICA CORPORATION**
**Tokyo (JP)**

(72) Inventor:
**Arai, Norikazu,**
**c/o Konica Corporation**
**Hachioji-shi, Tokyo (JP)**

(74) Representative:
**Henkel, Feiler, Hänzel**
**Möhlstrasse 37**
**81675 München (DE)**

(54) **Optical recording/reproducing apparatus, optical system therefore and coupling lens**

(57) An optical pickup apparatus for conducting recording and/or reproducing for an optical information recording medium is provided with a light source; a coupling optical system to change a divergent angle of light flux emitted from the light source; an objective lens optical system for converging the light flux having passed through the coupling optical system on a information recording surface of the optical information recording medium; and a photo detector to detect the reflected light from the information recording surface of the optical information recording medium. The objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

**FIG. 1**

EP 1 067 530 A2

## Description

## BACKGROUND OF THE INVENTION

The present invention relates to an optical pickup apparatus used for recording and/or reproducing for optical-information-recording medium, a recording/reproducing apparatus for an optical information recording medium, a light-converging optical system and a coupling lens. It relates, in particular, to an optical pickup apparatus, a recording/reproducing apparatus for an optical information recording medium, a light-converging optical system and a coupling lens, wherein a numerical aperture is large and temperature characteristics are excellent in spite of an objective lens optical system including a lens made of resin materials.

In recent years, there has been developed a DVD which is in about the same size as that of a CD representing a conventional optical information recording medium and has recording density which has been enhanced, and it is spreading rapidly. When a DVD needs to be reproduced, a laser whose light source has a wavelength of 635 nm - 660 nm is used, and a diverged light flux emitted from the laser is collimated once by a collimator lens to be a parallel light flux, then, it is made to enter an objective lens whose numerical aperture (NA) on the part of optical information recording medium is 0.6, and is converged on an information recording surface through a transparent base board of the optical information recording medium.

An optical pickup apparatus for reproduction of DVD lacks its practicality, unless it conducts reproduction of CD and CD-R too. DVD and CD are different each other in terms of a thickness of a transparent base board and of numerical aperture NA of an objective lens on the part of an optical information recording medium. In addition to that, CD-R absorbs light having a wavelength of 635 nm - 660 nm, which makes it necessary for the optical pickup apparatus to be provided with two lasers including a laser with a wavelength of 635 nm - 660 nm and a laser with a wavelength of 780 nm.

Even in the case of an interchangeable reproduction apparatus for DVD and CD, various technologies wherein a single objective lens is used for reproduction of DVD and for reproduction of CD and CD-R have been developed and put to practical use for cost reduction and compactness (for example, see TOKKAIHEI No. 11-96585).

In the case of a CD-reproducing apparatus, it is common that an objective lens made of resin is used, and in the case of a DVD-reproducing apparatus too, an objective lens made of resin is put to practical use for cost reduction as in the case of CD.

Incidentally, in the case of an objective lens made of resin, aberration caused by a refractive index change which is caused by temperature change is greater than that in an objective lens made of a glass material, and in general, this refractive index change in resin material is greater than that in glass material by one figure or more.

Now, when it is assumed that a temperature difference between an ambient temperature used actually and a standard design temperature is represented by $\Delta T$ wherein an amount of change of wavefront aberration caused by this temperature difference $\Delta T$ is mainly a spherical aberration component, an amount of change of the spherical aberration component in the wavefront aberration is represented by $\Delta Wo$, numerical aperture of an objective lens on the part of optical information recording medium (on the part of an image) is represented by NA, a focal length is represented by f, a lateral magnification is represented by M, and a proportional coefficient is represented by $\beta$, the following expression holds.

$$\Delta Wo = \beta \cdot \{NA \cdot (1 - M)\}^4 \cdot f \cdot \Delta T \qquad (1)$$

Further, a two-layer DVD disk having great capacity is spreading, and two layers are arranged to be away from each other by a distance of about 0.05 mm. Accordingly, although spherical aberration is zero for reproduction of a layer on one side, spherical aberration caused by a difference in a distance from the surface of a base board exists for the layer on the other side.

In the two-layer disk, therefore, spherical aberration for the layer which is farther from the surface of the base board is greater, compared with that for the layer which is closer to the surface of the base board.

When reproducing the two-layer disk by the use of an objective lens made of resin, therefore, an influence by temperature and an influence by the image forming position are overlapped, and when reproducing the layer which is farther from the base board surface at high temperature, the spherical aberration is greatest, while when reproducing the layer closer to the base board surface, the spherical aberration is smallest.

When considering up to the two-layer DVD disk, it is preferable to make the change of spherical aberration caused by temperature change to be small as far as possible. In an optical system of DVD, there is used a collimator lens as stated above.

In TOKKAIHEI No. 9-185836, there is disclosed a technology to improve temperature characteristics by making lateral magnification M of the objective lens optical system to satisfy the relationship of 0 < M < 1. However, when M is made to be greater, a diameter of a coupling optical system which transforms a divergent angle of divergent light emitted from a light source needs to be large, which makes an optical pickup apparatus to be large.

In TOKKAIHEI No. 9-138344, there is disclosed a coupling optical system including a lens made of resin material having positive refracting power. Namely, the coupling optical system is a coupling lens which is made of one piece of resin material and has positive refracting power in one occasion, and it is a coupling optical system which includes a glass-made lens having negative refracting power in addition to a lens which is made of resin material and has positive refracting power in the other occasion.

However, when a DVD-reproduction apparatus is equipped on an automobile where an ambient temperature change is great, the former structure stated above can not improve temperature characteristics of spherical aberration sufficiently.

Even in the latter structure, cost increase is caused because a glass lens having negative refracting power is used as one of plural lenses of the coupling optical system, and optical axis shifting caused by temperature change is feared because plural lenses including resin-made lenses and glass-made lenses are used, although improvement of temperature characteristics is better than that in the former case.

## SUMMARY OF THE INVENTION

It is intended in the invention to realize an inexpensive optical system which keeps sufficient capacity against changes of ambient temperature used, without making the optical system to be large, in an optical system employing a resin-made objective lens for recording and/or reproducing for optical information recording media.

The above object can be attained by the following structures according to the invention.

(1-1) An optical pickup apparatus for conducting recording/reproducing for an optical information recording medium, comprises:

   a light source;
   a coupling optical system to change a divergent angle of light flux emitted from the light source;
   an objective lens optical system for converging the light flux having passed through the coupling optical system on a information recording surface of the optical information recording medium; and
   a photo detector to detect the reflected light from the information recording surface of the optical information recording medium;
   wherein the objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

(1-2) In the optical pickup apparatus of (1-1), the annular band-shaped diffractive surface is provided on one of surfaces of the lens made of a resin and having the positive refracting power in the coupling optical system.

(1-3) In the optical pickup apparatus of (1-1), the lens made of a resin and having the positive refracting power in the coupling optical system is a coupling lens and the coupling optical system consists of the coupling lens.

(1-4) In the optical pickup apparatus of (1-1), the coupling optical system is a collimate optical system to make the light flux emitted from the light source to be parallel light flux to the optical axis.

(1-5) In the optical pickup apparatus of (1-1), the lens made of a resin and having a positive refracting power in the objective lens optical system is an objective lens and the objective lens optical system consists of the object lens.

(1-6) In the optical pickup apparatus of (1-4), the collimate optical system comprises a collimate lens and the optical pickup apparatus adjusts the collimate lens or the light source to shift in the optical axis so that the light flux emitted from the light source becomes parallel light flux to the optical axis.

(1-7) In the optical pickup apparatus of (1-1), the optical pickup apparatus comprises the light source as a first light source and further comprises a second light source.

(1-8) In the optical pickup apparatus of (1-7), the first light source emits light flux having a wavelength $\lambda 1$ and the second light source emits light flux having a wavelength $\lambda 2$ longer than the wavelength $\lambda 1$.

(1-9) In the optical pickup apparatus of (1-7), the first light source emits light flux used for recording/reproducing information for a first optical information recording medium and the second light source emits light flux used for recording/reproducing information for a second optical information recording medium which needs a numerical aperture of an objective lens smaller than that for the first optical information recording medium.

(1-10) In the optical pickup apparatus of (1-7), the optical pickup apparatus comprises the photo detector as a first photo detector to detect reflected light flux when the light flux emitted from the first light source is reflected on an information recording surface of the first optical information recording medium and further comprises a second photo detector to detect reflected light flux when the light flux emitted from the second light source is reflected on an information recording surface of the second optical information recording medium.

(1-11) In the optical pickup apparatus of (1-7), the optical pickup apparatus comprises the coupling optical system as a first coupling optical system to change a divergent angle of the light flux emitted from the first light source and further comprises a second coupling optical system to change a divergent angle of the light flux emitted from the second light source and an optical synthesizing device to let the light flux having passed through the first coupling system and the light flux having passed through the second coupling system to proceed in a substantially same direction.

(1-12) In the optical pickup apparatus of (1-7), the optical pickup apparatus further comprises an optical synthesizing device to let the light flux emitted from the first light source and the light flux emitted from the second light source to proceed in a substantially same direction and the coupling optical system to change a divergent angle of the light flux having passed through the optical synthesizing device.

(1-13) In the optical pickup apparatus of (1-7), the optical pickup apparatus further comprises an aperture limiting device to allow the light flux emitted from the first light source to pass through and not to allow partial light flux proceeding a predetermined region away from the optical axis among the light flux emitted from the second light source to pass through.

(1-14) In the optical pickup apparatus of (1-13), the aperture limiting device is a annular band-shaped filter to allow the light flux emitted from the first light source to pass through and to reflect or absorb the partial light flux proceeding the predetermined region away from the optical axis among the light flux emitted from the second light source.

(1-15) In the optical pickup apparatus of (1-13), the aperture limiting device is a annular band-shaped filter to allow the light flux emitted from the first light source to pass through and to diffract the partial light flux proceeding the predetermined region away from the optical axis among the light flux emitted from the second light source.

(1-16) In the optical pickup apparatus of (1-10), the first light source and the first photo detector or the second light source and the second photo detector are made in a single unit.

(1-17) An optical information recording medium recording and/or reproducing apparatus for conducting recording/reproducing for an optical information recording medium, comprises:

an optical pickup apparatus comprising

a light source,
a coupling optical system to change a divergent angle of light flux emitted from the light source,
an objective lens optical system for converging the light flux having passed through the coupling optical system on a information recording surface of the optical information recording medium; and
a photo detector to detect the reflected light from the information recording surface of the optical information recording medium;

wherein the objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

(1-18) A converging optical system used for an optical pickup apparatus for conducting recording/reproducing for an optical information recording medium, comprises:

a coupling optical system to change a divergent angle of light flux emitted from a light source; and
an objective lens optical system for converging the light flux having passed through the coupling optical system on a information recording surface of the optical information recording medium;
wherein the objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

(1-19) A coupling lens, comprises:

a lens made of a resin and having a positive refracting power, and
an annular band-shaped diffractive section having a negative diffractive power provide on at least one of surfaces of the lens.

(1-20) In the coupling lens of (1-19), the following formula is satisfied,

$$0.12 < dr/f < 1.2$$

wherein dr is a diameter of the annular band-shaped diffractive section and f is a focal length of the lens.

(1-21) In the coupling lens of (1-19), the coupling lens is a collimate lens.

Further, the above object may be attained by the following preferable structures according to the invention.

(2-1) A light-converging optical system for recording on and/or reproducing from an optical information recording medium of the invention is represented by one having therein at least a coupling optical system transforming a divergent angle of divergent light emitted from a light source and an objective lens optical system which converges a light flux coming from the coupling optical system on an information recording surface of an optical information recording medium, wherein the objective lens optical system includes at least a lens which is made of one resin material and has positive refracting power, and the coupling optical system includes at least a lens which is made of one resin material and has positive refracting power and has a zonal diffraction surface having negative diffraction power.

(2-2) Or, a light-converging optical system for recording on and/or reproducing from an optical information recording medium of the invention is represented by one having therein at least a coupling optical system transforming a divergent angle of divergent light emitted from a light source and an objective lens optical system which converges a light flux coming from the coupling optical system on an information recording surface of an optical information recording medium, wherein the objective lens optical system includes at least a lens which is made of one resin material and has positive refracting power, and the coupling optical system includes at least a lens which is made of one resin material and has positive refracting power and a surface on at least one side of the lens has a zonal diffraction surface having negative diffraction power.

(2-3) In the light-converging optical system for recording on and/or reproducing from an optical information recording medium, the coupling optical system can be composed of a single lens.

(2-4) The coupling optical system stated above can be a collimating optical system which converts an incident diverged light flux into a light flux which is mostly in parallel with an optical axis.

(2-5) Further, the objective lens optical system stated above may also be an objective lens composed of a single lens which converges a light flux coming from the coupling lens optical system on an information recording surface of an optical information recording medium.

(2-6) An optical pickup apparatus of the invention is characterized to be equipped with a light-converging optical system for recording on and/or reproducing from an optical information recording medium stated above.

(2-7) Namely, an optical pickup apparatus of the invention is represented by one equipped with a light source, a coupling lens which converts a divergent angle of divergent light emitted from the light source, an objective lens optical system which converges a light flux coming from the coupling lens on an information recording surface of an optical information recording medium and an optical detection unit which receives light reflected on the optical information recording medium, wherein the objective lens optical system includes at least one lens which is made of resin material and has positive refracting power, and the coupling lens mentioned above is a lens which has positive refracting power and a surface on at least one side of the lens has a zonal diffraction surface having negative diffraction power.

(2-8) The coupling lens can be a collimator lens which makes an incident divergent light flux to be a light flux which is mostly in parallel with an optical axis.

(2-9) The light source or the collimator lens can be moved in the direction of an optical axis for adjustment so that an emerging light flux coming out of the collimator lens may be mostly collimated.

(2-10) An optical pickup apparatus of the invention is equipped with a first light source for recording on a first optical information recording medium and/or for reproducing from the first optical information recording medium, a second light source which is different from the first light source in terms of wavelength and is for recording on a second optical information recording medium and/or for reproducing from the second optical information recording medium, two coupling lenses each converting a divergent angle of a divergent light flux emitted from each light source into a desired divergent angle, a light composing means which composes each light flux coming from each coupling lens so that all light fluxes may advance almost in one direction, an objective lens optical system which converges a light flux coming from the light composing means on an information recording surface of the optical information recording medium, and with an optical detection unit which receives light reflected on the optical information recording medium, and the objective lens optical system stated above includes at least one lens which is made of resin material and has positive refracting power, and at least one of the two coupling lenses stated above may be made to be a lens which has positive refracting power and a surface on at least one side of the lens has a zonal diffraction surface having negative diffraction power.

(2-11) In an optical pickup apparatus equipped with a first light source for recording on a first optical information recording medium and/or for reproducing from the first optical information recording medium, a second light source which is different from the first light source in terms of wavelength and is f or recording on a second optical information recording medium and/or for reproducing from the second optical information recording medium, a light composing means which composes a light flux coming from the first light source and a light flux coming from the second light source may advance almost in one direction, a coupling lens converting a divergent angle of a divergent light flux emitted from each light source, an objective lens optical system which converges a light flux coming from the coupling lens on an information recording surface of the optical information recording medium, and with an optical detection unit which receives light reflected on the optical information recording medium, it is possible that the aforesaid objective lens optical system includes at least one lens which is made of resin material and has positive refracting power, and the coupling lens stated above is a lens which is made of resin material and has positive refracting power, and at least one side of the lens has a zonal diffraction surface having negative diffraction power.

(2-12) It is possible for the aforesaid optical detection unit to have a first optical detection unit to detect a light flux emitted from the first light source and a second optical detection unit to detect a light flux emitted from the second light source.

(2-13) In the optical pickup apparatuses of (2-10) to (2-12), it is possible to provide, between the light composing means and the optical information recording medium, an aperture limiting mean which transmits a light flux emitted from the first light source and does not transmit a light flux passing through a prescribed area which is away from an optical axis among a light flux emitted from the second light source.

(2-14) The aperture limiting means may be a zonal filter which transmits a light flux emitted from the first light source and reflects or absorbs a light flux passing through a prescribed area which is away from an optical axis among a light flux emitted from the second light source.

(2-15) Or, the aperture limiting means may also be a zonal filter which transmits a light flux emitted from the first light source and diffracts a light flux passing through the aforesaid prescribed area which is away from an optical axis among a light flux emitted from the second light source.

(2-16) In the optical pickup apparatus of (2-12), at least a pair of the first light source and the first optical detection unit or a pair of the second light source and the second optical detection unit can be unitized.

In the invention, "the zonal diffraction surface having negative diffraction power" means a diffraction surface which is formed in a concentric and zonal pattern when viewed in the optical axis direction, and when a light flux emitted from a light source enters this diffraction surface directly or indirectly through other optical elements (lens, prism and filter), this diffraction surface has negative diffraction power against the incident light flux, in other words, the diffraction surface operates to diverge the light flux more. In this case, the concentric and zonal pattern means one which looks like a concentric and zonal shape around an optical axis or its neighboring portion.

When the diffraction surface is provided on the surface having refracting power, it means that the diffraction light caused by the minute structure (for example, a serrated relief shape) for diffraction itself has the aforesaid diverging action for the incident light flux. This can be confirmed by assuming (for example, assuming by means of simulation) an optical surface representing an enveloped minute structure for diffraction and by comparing this with a light flux caused by refraction of the assumed optical surface, and when a light flux by the zonal diffraction surface having refracting power is diverged to expand a light flux by the aforesaid assumed optical surface like forming a minute structure for diffraction on the refraction surface, this is included in the invention. For example, a case that a converged light is diverged to a diverged light by a zonal diffraction surface and a case that a converged light is diverged to a less-converged light by a zonal diffraction surface, these cases are included in the invention. Incidentally, a surface having refracting power means a surface having a portion to change a divergent angle of a light flux at least on a part of its surface, and it includes, for example, occasions wherein an optical axis and its neighboring portion form a pattern of the surface that is mostly perpendicular to the optical axis, and a sign of refracting power is opposite to that of desired refracting power.

In the invention, "objective lens optical system" represents, in a narrow sense, a lens system having light-converging action which is arranged oppositely at the position closest to an optical information recording medium, and it represents, in a wide sense, a lens system which is arranged at the position facing an optical information recording medium and can be moved by an actuator at least in the optical axis direction.

Further, "coupling optical system" represents a lens system which is structured separately from the objective lens optical system and has an action to change a divergent angle of a light flux when a divergent light flux emitted from a light source enters the coupling optical system directly or indirectly, and for example, it includes the so-called collimating optical system which turns a divergent light flux emitted from a light source into a collimated light flux which is mostly in parallel with an optical axis.

In the invention, a zonal diffraction surface having negative diffraction power (having an action to diverge a light flux emitted from a light source) can be the surface on one side of a resin-made lens having positive refracting power which is included in the aforesaid coupling optical system, which is preferable because it is possible to realize a low price by reducing the number of optical elements including lenses.

It is further possible for the coupling optical system to be a collimating optical system which turns an incident divergent light flux into a light flux that is mostly in parallel with an optical axis. The objective lens optical system and/or the coupling optical system mentioned above can be a single lens, and in that case, it is possible to realize a low price as in the foregoing, and to make a light-converging optical system to be small in size, which is preferable.

Next, basic actions of the invention will be considered.

When a coupling lens is made of resin material for an objective lens made of resin material, fluctuation in spherical aberration is smaller compared with an occasion where a coupling lens is made of glass material, in the case of a total light-converging optical system for recording on and/or reproducing from an optical information recording medium (for example, see TOKKAIHEI No. 9-138344).

Let is be assumed in this case that design and manufacture have been conducted so that no aberration is caused on an objective lens when a collimated light flux enters at the standard designed temperature. Accordingly, as a coupling lens, there is used a collimator lens which converts a light flux emitted from a light source into a collimated light flux having no aberration.

In this optical system, a light emitting point of a light source and a focal point of a collimator lens on the part of a light source agree with each other at the standard designed temperature, and a collimated light flux emerges from the collimator lens. When the collimator lens is made of resin material, a focal length of the collimator lens is caused to be longer when temperature rises. Namely, the focal point is shifted in the optical axis direction to be farther than the light emitting point from the collimator lens. As a result, a light flux that emerges from the collimator lens is turned into a divergent light. In an aspherical objective lens composed of a resin-made single lens which is designed and manufactured to have no aberration when a collimated light flux enters the aspherical objective lens, spherical aberration moves toward its under level when a divergent light flux enters the aspherical objective lens.

When a change of image forming magnification of an objective lens is represented by $\Delta M$, $\Delta M < 0$ holds in the case of the foregoing, and when an amount of change in spherical aberration component of wavefront aberration caused by the action mentioned above is represented by $\Delta Wco$, the following expression holds;

$$\Delta Wco = \gamma \, \Delta M \qquad (2)$$

wherein, $\gamma$ is a proportional coefficient determined by NA, M and f, and it takes a positive value.

An amount of change in spherical aberration component of wavefront aberration of the total light-converging optical system $\Delta Wt$ is expressed by the following expression from expressions (1) and (2):

$$\begin{aligned} \Delta Wt &= \Delta Wo + \Delta Wco \qquad (3) \\ &= \beta \cdot \{NA \cdot (1 - M)\}^4 \cdot f \cdot \Delta T + \gamma \cdot \Delta M \end{aligned}$$

wherein, an absolute value of $\Delta M$ needs to be greater for making $\Delta Wt$ to be smaller, because each of $\beta$, NA, M and f is a value which is mostly fixed.

$\Delta M$ can be expressed by the following expression, when proportional constant $\mu$ is smaller than zero, and temperature change rate of collimator lens back focus $f\,bc$ of collimator lens is represented by $d\,f\,bc/dT$.

$$\Delta M = \mu \cdot d\,f\,bc\,/\,dT \cdot \Delta T \qquad (4)$$

Namely, it is possible to make $\Delta Wt$ smaller by making $d\,f\,bc\,/\,dT$ greater and thereby by making an absolute value of $\Delta M$ greater.

Now, when a total collimator lens is made to be a diffraction optical element having positive focal length fc, the following expression holds.

Power (refracting power) $\phi c$ of a collimator lens is expressed by the following expression.

$$\phi c = 1\,/\,fc \qquad (5)$$

It is further expressed by the following expression, when the collimator lens is assumed to be a thin lens for simple explanation, and power by refraction is represented by $\phi cr$ and power by diffraction is represented by $\phi cd$.

$$\phi c = \phi cr + \phi cd \qquad (6)$$

When a focal length resulting from a refraction effect is represented by $f\,cr$ and a focal length resulting from a diffraction effect is represented by $f\,cd$, the following expressions hold.

$$\phi cr = 1 / f\,cr \tag{7}$$

$$\phi cd = 1 / f\,cd \tag{8}$$

For a thin lens, the expression is as follows.

$$f\,bc = fc = 1 / \phi c \tag{9}$$

Therefore the following holds.

$$d\,f\,bc / dT = -\phi c^{-2} \cdot d\,\phi c / dT \tag{10}$$

Since a change in power by diffraction caused by temperature change is small compared with a change in power by refraction caused by temperature change, if this is neglected, the expressions (4) and (10) lead to the following.

$$\begin{aligned}
\Delta M &= -\mu \cdot \phi c^{-2} \cdot d\phi c / dT \cdot \Delta T \\
&= -\mu \cdot \phi c^{-2} \cdot d\phi cr / dT \cdot \Delta T \\
&= -\mu \cdot \phi c^{-2} \cdot \partial\phi cr / \partial n \cdot dn / dT \cdot \Delta T \\
&= -\mu \cdot \phi c^{-2} \cdot \phi cr / (n - 1) \cdot dn / dT \cdot \Delta T
\end{aligned} \tag{11}$$

From (11), it is found that the greater $\phi cr$ is, the higher the correction effect is.

Further, from (6), it is found that $\phi cr$ can be made great by making $\phi cd$ to be a negative value.

Namely, the collimator lens is a lens which is made of resin material and has positive refracting power, and its surface on at least one side thereof needs to be a zonal diffraction surface having negative diffraction power (having an action to diverge a light flux emitted from a light source).

Incidentally, in a diffraction optical element, a focal length is highly dependent on a wavelength. When a light source is a semiconductor laser, an oscillated wavelength is temperature-dependent, and the higher the temperature is, the longer the wavelength is.

When $d\lambda/dT$ represents temperature-dependency of a oscillated wavelength, its typical value is shown below.

$$d\lambda/dT = 0.2\ nm/{}^{\circ}C$$

Next, influence of this will be examined.

A change in power of a collimator lens caused when a wavelength is changed by $\Delta\lambda$ is as follows.

$$\begin{aligned}
\Delta\phi c &= \Delta\phi cr + \Delta\phi cd \\
&= \partial\phi cr / \partial n \cdot dn / d\lambda \cdot \Delta\lambda + d\phi cd / d\lambda \cdot \Delta\lambda \\
&= (n - 1)^{-1} \cdot \phi cr \cdot dn / d\lambda \cdot \Delta\lambda + \lambda o^{-1} \cdot \phi cd \cdot \Delta\lambda
\end{aligned} \tag{12}$$

In the same consideration, the expressions (4), (10) and (12) lead to the following.

$$\begin{aligned}
\Delta M &= \mu \cdot d\,f\,bc / dT \cdot \Delta T \\
&= -\mu \cdot \phi c^{-2} \cdot d\phi c / dT \cdot \Delta T \\
&= -\mu \cdot \phi c^{-2} \cdot \partial\phi c / \partial\lambda / dT \cdot \Delta T \\
&= -\mu \cdot \phi c^{-2} \cdot \{(n - 1)^{-1} \cdot \phi cr \cdot dn / d\lambda + \lambda o^{-1} \cdot \phi cd\} \cdot d\lambda / dT \cdot \Delta T
\end{aligned}$$

Since $\mu < 0$, $\phi c^{-2} > 0$ and $d\lambda / dT > 0$ hold in the expression above, if the value in braces "{ }" is negative, then, $\Delta M < 0$ holds in the case of $\Delta T > 0$ and further compensation for temperature change can be carried out.

Because of $(n - 1) > 0$, $\phi cr > 0$ and $dn/d\lambda < 0$, the first term $(n - 1)^{-1} \cdot \phi cr \cdot dn / d\lambda$ is negative.

Because of $\lambda o > 0$ and $\phi cd < 0$, the second term $\lambda o^{-1} \cdot \phi cd$ is negative.

Therefore, the sum of the first term and the second term is also negative, and wave-dependency of a semiconductor laser further increases an effect of the invention.

## BRIEF DESCRIPTION OF THE DRAWINGS

Fig. 1 is an optical path diagram showing the structure of an example of the embodiment of an optical pickup apparatus in the invention.

Fig. 2 is an optical path diagram showing the structure of another example of the embodiment of an optical pickup apparatus in the invention.

Fig. 3 is a graph showing temperature characteristics of an optical system for an optical pickup apparatus in the invention.

Fig. 4 is an optical path diagram showing an example of the structure of an optical system for an optical pickup apparatus in the invention.

Fig. 5 is an optical path diagram showing another example of the structure of an optical system for an optical pickup apparatus in the invention.

Fig. 6 is a partial conceptual diagram of an optical system showing an example wherein an element having a zonal diffraction surface is arranged in a coupling optical system for an optical pickup apparatus of the invention.

Fig. 7 is a partial conceptual diagram of an optical system showing an example wherein a zonal diffraction surface is arranged on a slanting surface of a beam splitter in a coupling optical system for an optical pickup apparatus of the invention.

## DETAILED DESCRIPTION OF THE PREFERRED EMBODIMENT

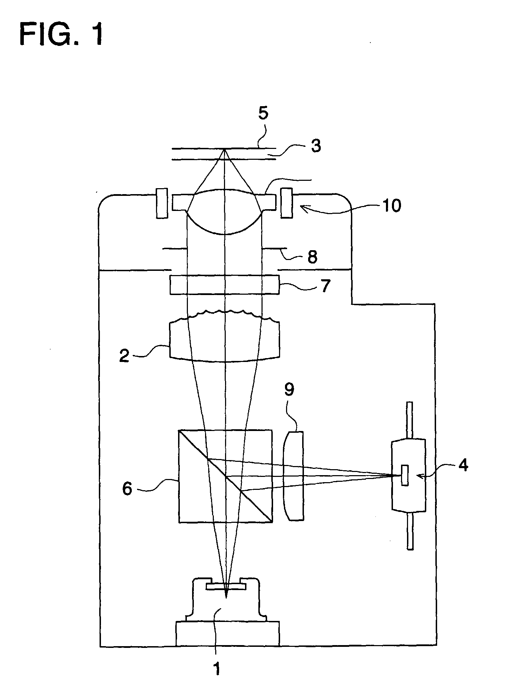

An embodiment of an optical pickup apparatus equipped with the light-converging optical system stated above will be explained as follows, referring to Fig. 1. The optical pickup apparatus in Fig. 1 is equipped with semiconductor laser 1 representing a light source, coupling lens 2 which converts a divergent angle of a divergent light emitted from the light source, objective lens optical system 3 which converges a light flux coming from the coupling lens on an information recording surface of an optical information recording medium, and with optical detection unit 4 which receives reflected light from the optical information recording medium. The numeral 5 represents an information recording surface of the optical information recording medium, 6 represents a beam splitter which divides the reflected light, 7 represents 1/4 wavelength plate, 8 represents a diaphragm, 9 represents a cylindrical lens and 10 represents an actuator for focus tracking.

It is characterized in that the objective lens optical system 3 includes a lens which is formed by at least one sheet of resin material and has positive refracting power, and the coupling lens 2 is formed by resin material and it is a lens having positive refracting power in which a surface on at least one side of the lens has a zonal diffraction surface having negative diffraction power (having an action to diverge a light flux emitted from a light source).

The coupling lens 2 may also be a collimator lens which causes an incident divergent light flux to be a light flux which is mostly in parallel with an optical axis, and in this case, it is preferable that a light source or the collimator lens is moved in the direction of the optical axis for adjustment so that a light flux emerging from the collimator lens may become a mostly-collimated light.

In the present embodiment, a coupling optical system is composed only of coupling lens 2, and an objective lens optical system is composed only of objective lens 3. However, the invention is not limited to this embodiment. The coupling optical system may also have a plurality of lenses and a beam splitter, and the objective lens optical system may also have a plurality of lenses.

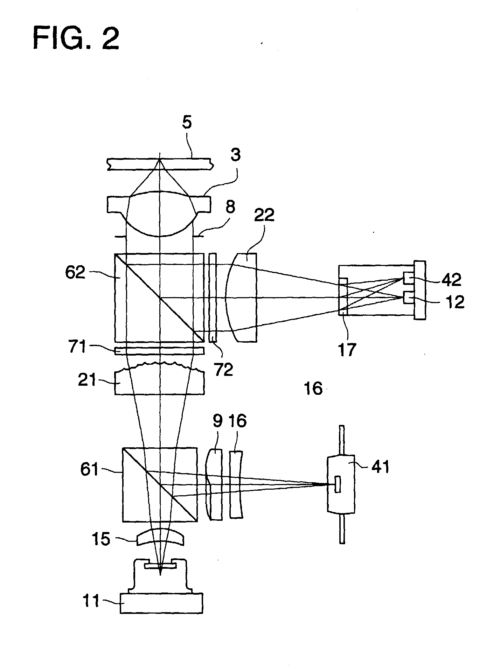

Another embodiment will be explained as follows, referring to Fig. 2. In the embodiment, the same members as those in the optical pickup apparatus in Fig. 1 are given the same symbols. In the optical pickup apparatus shown in Fig. 2, there are provided first light source 11 for recording on and/or reproducing from the first optical information recording medium, second light source 12 which is different from the first light source 11 in terms of wavelength and records on and/or reproduces from the second optical information recording medium, two coupling lenses 21 and 22 each converting a divergent angle of a divergent light flux emitted from each of light sources into a desired divergent angle, beam splitter 62 representing a light composing means which composes the light fluxes so that they advance in the same direction, objective lens optical system 3 which converges a light flux from the beam splitter 62 on information recording surface 5 of the optical information recording medium, and optical detection units 41 and 42 each receiving reflected light from the optical information recording medium. Incidentally, in the drawings, the numeral 8 represents a diaphragm, 71 and 72 represent 1/4 wavelength plate, 15 represents a coupling lens which makes an extent of detergence of a detergent light flux emitted from light source 11 to be small, 16 represents a concave lens, and 17 represents a hologram for dividing a reflected light flux. In the drawing, an actuator for focus tracking is omitted.

The objective lens optical system 3 includes a lens which is formed by at least on sheet of resin material and has positive refracting power, and at least one of the coupling lenses 21 and 22, for example, the coupling lens 21 is made to be a lens made of resin material and having positive refracting power wherein at least one surface thereof has a zonal diffraction surface having negative diffraction power (having an action to further diverge a light flux emitted from a light source).

Incidentally, when there are provided a plurality of coupling optical systems, it is preferable to provide a zonal diffraction surface on a coupling optical system where there enters a light flux used for an optical information recording medium having greater necessary numerical aperture. More preferable is that all coupling optical systems have a zonal diffraction surface.

It is preferable to arrange, between beam splitter 62 representing the light composing means and optical information recording medium 5, an aperture limiting means which transmits a light flux emitted from the first light source and does not transmit a light flux which passes through a prescribed area that is away from an optical axis among a light flux emitted from the second light source.

In this case, the aperture limiting means which does not transmit a light flux passing through a prescribed area is one which does not make a light flux passing through the prescribed area to form an image at least on an ordinary image forming position, and one which can limit an aperture substantially is acceptable, and there is given the following embodiment.

This aperture limiting means may be either a zonal filter which transmits a light flux emitted from the first light source, and reflects or absorbs a light flux passing through an area being away from an optical axis among a alight flux emitted from the second light source, or a zonal filter which transmits a light flux emitted from the first light source and diffracts a light flux passing through an area being away from an optical axis of the diffraction pattern among a light flux emitted from the second light source.

In Fig. 2, second semiconductor laser 12 is unitized with optical detection unit 42 and with hologram 17. "Unit" or "unitization" means that unitized members and means are arranged to be incorporated integrally in an optical pickup apparatus, and they are arranged to be in the state wherein they can be incorporated as a part in the course of assembling an apparatus.

The first light source and the first optical detection unit may also be unitized naturally.

Incidentally, in Fig. 2, it may be structured such that a single coupling optical system is provided at the objective lens side of the light composing means (the optical synthesizing means) 62 without providing the coupling optical systems 21, 22 and the light passing through the light composing means from the light source is made to be incident on the coupling optical system. In this case, the diffractive surface is provided on the coupling lens.

In an optical system for recording on and reproducing from DVD, as stated above, it has been found that it is possible to keep sufficient efficiency at low cost against ambient temperature fluctuation without making an optical system large, by using a resin-made objective lens and by combining with a resin-made collimator lens having a zonal diffraction surface having negative diffraction power.

Incidentally, as seen in expression (1), $\Delta$Wo is made to be large in proportional to $\{NA \cdot (1 - M)\}^4$. Namely, an effect is expected for an optical system for recording on and reproducing from an optical information recording medium where NA is great and density is high, and an effect is expected also for M which is negative, namely, for making a coupling lens to be small.

Further, since $\Delta$Wo is made to be large in inverse proportion to a wavelength, there is an effect also for an optical system for recording on and reproducing from an optical information recording medium wherein a blue semiconductor laser is used.

For example, the effect of the present invention is more remarkable when applying to an optical information recording medium whose NA is 0.6 or more, which is preferable. It is more preferable that NA is 0.65 or more.

An optical information recording medium applicable to the invention is not restricted in particular, but various CDs such as CD, CD-R, CD-Video and CD-ROM, various DVDs such as DVD, DVE-ROM, DVE-RAM, DVD-R and DVD-RW, and MD as well as MO are preferably applied. What is especially preferable includes various DVDS such as DVD, DVD-ROM, DVD-RAM, DVD-R and DVD-RW.

In addition, when a wavelength of a light source is 700 mn or less, the effect is more remarkable, which is preferable. The more preferable is that a wavelength is not more than 500 nm such as a violet laser and a blue laser.

It is further preferable, from the viewpoint of a small size, that a diameter of a coupling lens is not greater than a diameter of an objective lens plus 2 mm. In the invention, even in the case where a converged light enters an objective lens, the aforesaid range can be satisfied, which is preferable.

Incidentally, it may be preferable to use a lens made of a resin having a percentage of saturated water content not larger than 0.4% as a coupling lens or an objective lens, further, there are given olefin resin or norbornane resin as preferable resin materials for a coupling lens and an objective lens.

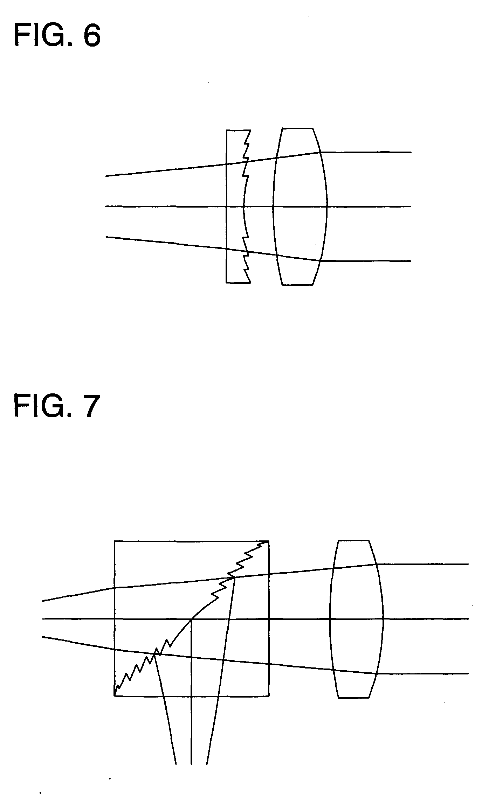

Further, in addition to a lens made of resin material and having positive refracting power disclosed in TOKKAIHEI No. 9-138344, it is possible, in the coupling lens optical system including a glass lens having negative refracting power, to make at least one optical surface thereof to be a zonal diffraction surface having negative diffraction power, and it is possible to realize a coupling optical system wherein a zonal diffraction surface having negative diffraction power is provided on a surface on one side of a parallel plane board or on a slanting surface of a beam splitter as shown in Figs. 6 and 7. In this case, the parallel plane board or a beam splitter on which a zonal diffraction surface is provided are also included in the coupling optical system.

Further, in recent years, there has been studied a recording and reproducing apparatus employing a near field recording technology, and a lens optical system has two or more lenses having positive refracting power. It is the same also in the optical system with NA of 0.8 or more, and even in the case where one or two out of two lenses having positive refracting power are made to be a resin-made lens, it is possible, by using the invention, to structure an optical system for recording on and reproducing from an optical information recording medium having sufficient efficiency at low cost for ambient temperature fluctuation, without making an optical system to be large.

An apparatus for recording and/or reproducing an optical information recording medium of the invention for recording/reproducing an optical information recording medium has therein an optical pickup apparatus of the invention, and it further has preferably a spindle motor.

A coupling lens of the invention is a resin-made lens having positive refracting power, and a zonal diffraction portion having negative diffraction power is provided on at least one side of the resin-made lens. Preferably, the following conditional expression is satisfied;

$$0.12 < dr/f < 1.2$$

wherein, dr represents a diameter of the aforesaid zonal diffraction portion and f represents a focal length.

Incidentally, the coupling lens may also be a collimator lens.

**EXAMPLE**

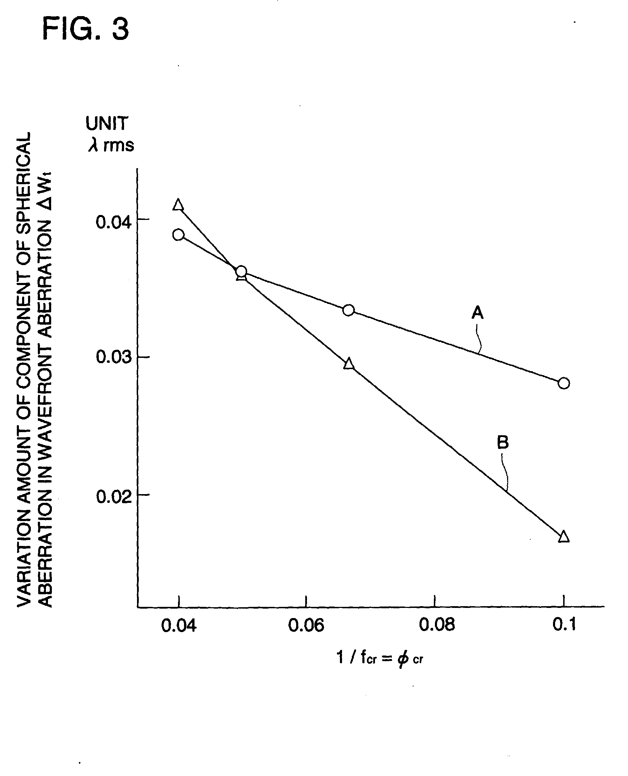

Fig. 3 shows results of the simulation of changes in wavefront aberration caused by temperature fluctuation which was made after designing a light-converging optical system based on the invention.

A light-converging optical system used in this case in a resin-made single lens whose both surfaces are aspherical wherein a light-source wavelength is 635 nm and a focal length of an objective lens optical system is 3.36 mm. A coupling lens optical system is a resin-made collimator lens whose focal length is 25.2 mm, namely with $fc = 25.2$ mm and $\phi c = 0.040$ mm$^{-1}$.

Fig. 3 shows a graph wherein the axis of ordinates represents variation amount of component of spherical aberration in wavefront aberration $\Delta Wt$ in this optical system, the axis of abscissas represents power $\phi cr$ caused by refraction, and temperature difference is made to be 30°C.

It is found that, when power $\phi cr$ grows to be greater than power $\phi c$ of a collimator lens (namely, when the sign of power $\phi cd$ caused by diffraction is negative, and its absolute value grows greater), the variation amount $\Delta Wt$ is made smaller.

Incidentally, curve A in the graph shows a simulation value in the occasion wherein the wavelength of a light source is 635 nm and it remains unchanged even when temperature rises, and curve B shows a simulation value in the occasion wherein temperature-dependency of oscillation wavelength is considered, and its typical value of $d\lambda/dT = 0.2$ nm/°C is used, and the oscillation wavelength is lengthened from 635 nm to 641 nm by temperature rise of 30°C.

As is clear from the results, when the temperature-dependency of oscillation wavelength of a semiconductor laser is considered, the temperature-dependency of the wavefront aberration is further made to be smaller.

Next, an example of design numerals for the actual light-converging optical system will be shown below.

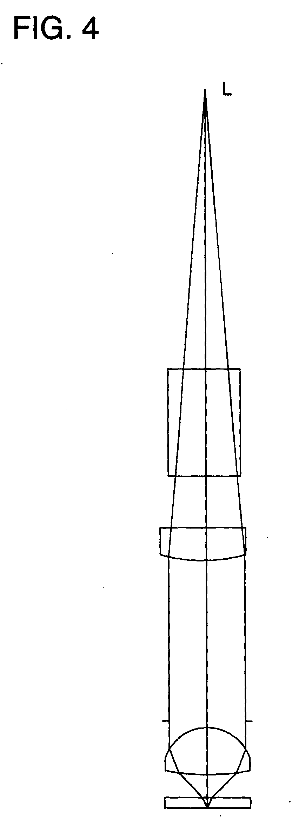

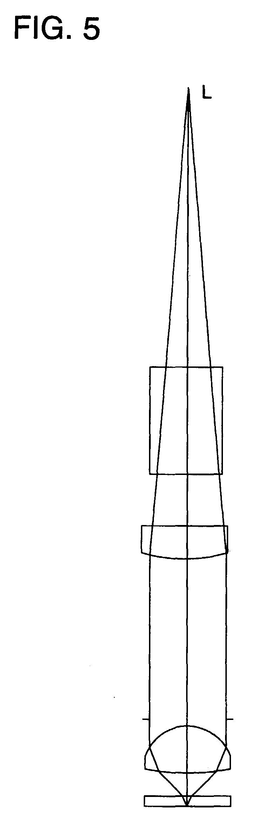

Structure of the optical system in Example 1 is as shown in Fig. 4 wherein focal length fr caused by refraction of a collimator is 15 mm. The optical system in Example 2 is shown in Fig. 5 wherein focal length fr caused by refraction of a collimator is 10 mm.

Incidentally, in Fig. 4 and Fig. 5, there are described a cover glass, a coupling lens (collimator lens), a diaphragm, an objective lens and a transparent base board of an optical information recording medium in this order from light source L. A zonal diffraction surface is provided on the side of the coupling lens (collimator lens) closer to the objective lens.

In the table, ri represents a radius of curvature of a refraction surface, di represents a distance between surfaces, and ni shows a refractive index at a primary wavelength. An expression of surface form is as follows;

$$X = \frac{h^2/r}{1+\sqrt{1-(1+\kappa)(h/r)^2}} + \sum_j A_j h^{Pj} \tag{14}$$

wherein, X represents the axis in the direction of an optical axis, h represents the axis in the direction perpendicular to the optical axis, the advancing direction of light is positive, r represents a paraxial radius of curvature, κ represents a constant of the cone, Aj represents an aspheric surface coefficient, and Pj (Pj = 0) represents an aspheric surface power number.

A diffraction surface is expressed by the following expression where the unit is in mm, as a function of optical path difference.

$$\Phi = \sum_{i=1} B_{2i} h^{2i} \qquad (15)$$

Example 1

Diffraction collimator (fr = 15 mm)

| f = 3.3608 | f col = 25.2717 | mt = -1/7.5 |
|---|---|---|
| U = 43.0062 | NA = 0.6 | λ = 635 nm |

Table 1

| Surface No. | ri | di | ni |
|---|---|---|---|
| 1 | ∞ | 6.25 | 1.51455 |
| 2 | ∞ | 3.00 | |
| 3 | 84.461 | 2.00 | 1.49810 |
| 4 | -8.13204 | 10.0 | |
| 5 | 2.039 | 2.60 | 1.49810 |
| 6 | -5.387 | 1.56 | |
| 7 | ∞ | 0.6 | 1.58000 |
| 8 | ∞ | | |

Aspherical surface data

$4^{th}$ surface

Aspherical surface coefficient
$\kappa = -8.70 \times 10^{-1}$
$A_1 = 0$ P1 = 4.0
$A_2 = 0$ P2 = 6.0
$A_3 = 0$ P3 = 8.0
$A_4 = 0$ P4 = 10.0
Optical path difference function
$B_2 = 1.37 \times 10^{-2}$
$B_4 = 4.18 \times 10^{-7}$
$B_6 = 8.55 \times 10^{-9}$
$B_8 = 0$

5th surface

Aspherical surface coefficient
$\kappa = -4.13830 \times 10^{-1}$
$A_1 = -1.40430 \times 10^{-3}$ P1 = 4.0
$A_2 = -2.46290 \times 10^{-4}$ P2 = 6.0
$A_3 = -2.74020 \times 10^{-5}$ P3 = 8.0
$A_4 = -9.04900 \times 10^{-6}$ P4 = 10.0

6th surface

Aspherical surface coefficient
$\kappa = -2.25790 \times 10$
$A_1 = 9.89000 \times 10^{-3}$ P1 = 4.0
$A_2 = -3.43850 \times 10^{-3}$ P2 = 6.0
$A_3 = 8.07870 \times 10^{-4}$ P3 = 8.0
$A_4 = -6.87940 \times 10^{-5}$ P4 = 10.0

Example 2

Diffraction collimator (fr = 10 mm)

| f = 3.3608 | f col = 25.2717 | mt = -1/7.5 |
|---|---|---|
| U = 43.0062 | NA = 0.6 | $\lambda$ = 635 nm |

Table 2

| Surface No. | ri | di | ni |
|---|---|---|---|
| 1 | ∞ | 6.25 | 1.51455 |
| 2 | ∞ | 3.00 | |
| 3 | 84.461 | 2.00 | 1.49810 |
| 4 | -5.251 | 10.0 | |
| 5 | 2.039 | 2.60 | 1.49810 |
| 6 | -5.387 | 1.56 | |
| 7 | ∞ | 0.6 | 1.58000 |
| 8 | ∞ | | |

Aspherical surface data

$4^{th}$ surface

Aspherical surface coefficient
$\kappa = -7.12310 \times 10^{-1}$
$A_1 = 0$  P1 = 4.0
$A_2 = 0$  P2 = 6.0
$A_3 = 0$  P3 = 8.0
$A_4 = 0$  P4 = 10.0
Optical path difference function
$B_2 = 3.04550 \times 10^{-2}$
$B_4 = 9.59590 \times 10^{-5}$
$B_6 = 5.86260 \times 10^{-7}$
$B_8 = 0$

$5^{th}$ surface

Aspherical surface coefficient
$\kappa = -4.13830 \times 10^{-1}$
$A_1 = -1.40430 \times 10^{-3}$  P1 = 4.0
$A_2 = -2.46290 \times 10^{-4}$  P2 = 6.0
$A_3 = -2.74020 \times 10^{-5}$  P3 = 8.0
$A_4 = -9.04900 \times 10^{-6}$  P4 = 10.0

$6^{th}$ surface

Aspherical surface coefficient
$\kappa = -2.25790 \times 10$
$A_1 = 9.89000 \times 10^{-3}$  P1 = 4.0
$A_2 = -3.43850 \times 10^{-3}$  P2 = 6.0
$A_3 = 8.07870 \times 10^{-4}$  P3 = 8.0
$A_4 = -6.87940 \times 10^{-5}$  P4 = 10.0

In the Examples stated above, there has been shown an example wherein a zonal diffraction surface is provided on the entire optical surface, to which the invention is not limited.

For example, locations on an optical axis and in the vicinity of the optical axis do not necessarily need to be provided with a zonal diffraction surface, because the depth on these locations is great. It is preferable that an area of the zonal diffraction surface is 70% or more of the total area of the optical surface.

With regard to an optical pickup apparatus and its optical system of the invention, in an optical system employing a resin-made objective lens and a coupling optical system, it has become possible to realize an inexpensive optical system capable of keeping its sufficient capacity for fluctuation of ambient temperature used, through the simple structure to provide a zonal diffraction surface having negative diffraction power in a resin-made optical system included in the coupling optical system.

Disclosed embodiment can be varied by a skilled person without departing from the spirit and scope of the invention.

**Claims**

1.  An optical pickup apparatus for conducting recording/reproducing for an optical information recording medium, comprising:

a light source;

a coupling optical system to change a divergent angle of light flux emitted from the light source;

an objective lens optical system for converging the light flux having passed through the coupling optical system on a information recording surface of the optical information recording medium; and

a photo detector to detect the reflected light from the information recording surface of the optical information recording medium;

wherein the objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

2. The optical pickup apparatus of claim 1, wherein the annular band-shaped diffractive surface is provided on one of surfaces of the lens made of a resin and having the positive refracting power in the coupling optical system.

3. The optical pickup apparatus of claim 1, wherein the lens made of a resin and having the positive refracting power in the coupling optical system is a coupling lens and the coupling optical system consists of the coupling lens.

4. The optical pickup apparatus of claim 1, wherein the coupling optical system is a collimate optical system to make the light flux emitted from the light source to be parallel light flux to the optical axis.

5. The optical pickup apparatus of claim 1, wherein the lens made of a resin and having a positive refracting power in the objective lens optical system is an objective lens and the objective lens optical system consists of the object lens.

6. The optical pickup apparatus of claim 4, wherein the collimate optical system comprises a collimate lens and the optical pickup apparatus adjusts the collimate lens or the light source to shift in the optical axis so that the light flux emitted from the light source becomes parallel light flux to the optical axis.

7. The optical pickup apparatus of claim 1, wherein the optical pickup apparatus comprises the light source as a first light source and further comprises a second light source.

8. The optical pickup apparatus of claim 7, wherein the first light source emits light flux having a wavelength λ1 and the second light source emits light flux having a wavelength λ2 longer than the wavelength λ1.

9. The optical pickup apparatus of claim 7, wherein the first light source emits light flux used for recording/reproducing information for a first optical information recording medium and the second light source emits light flux used for recording/reproducing information for a second optical information recording medium which needs a numerical aperture of an objective lens smaller than that for the first optical information recording medium.

10. The optical pickup apparatus of claim 7, wherein the optical pickup apparatus comprises the photo detector as a first photo detector to detect reflected light flux when the light flux emitted from the first light source is reflected on an information recording surface of the first optical information recording medium and further comprises a second photo detector to detect reflected light flux when the light flux emitted from the second light source is reflected on an information recording surface of the second optical information recording medium.

11. The optical pickup apparatus of claim 7, wherein the optical pickup apparatus comprises the coupling optical system as a first coupling optical system to change a divergent angle of the light flux emitted from the first light source and further comprises a second coupling optical system to change a divergent angle of the light flux emitted from the second light source and an optical synthesizing device to let the light flux having passed through the first coupling system and the light flux having passed through the second coupling system to proceed in a substantially same direction.

12. The optical pickup apparatus of claim 7, further comprising an optical synthesizing device to let the light flux emitted from the first light source and the light flux emitted from the second light source to proceed in a substantially same direction and the coupling optical system to change a divergent angle of the light flux having passed through the optical synthesizing device.

13. The optical pickup apparatus of claim 7, further comprising an aperture limiting device to allow the light flux emitted from the first light source to pass through and not to allow partial light flux proceeding a predetermined region away from the optical axis among the light flux emitted from the second light source to pass through.

**14.** The optical pickup apparatus of claim 13, wherein the aperture limiting device is a annular band-shaped filter to allow the light flux emitted from the first light source to pass through and to reflect or absorb the partial light flux proceeding the predetermined region away from the optical axis among the light flux emitted from the second light source.

**15.** The optical pickup apparatus of claim 13, wherein the aperture limiting device is a annular band-shaped filter to allow the light flux emitted from the first light source to pass through and to diffract the partial light flux proceeding the predetermined region away from the optical axis among the light flux emitted from the second light source.

**16.** The optical pickup apparatus of claim 10, wherein the first light source and the first photo detector or the second light source and the second photo detector are made in a single unit.

**17.** An optical information recording medium recording and/or reproducing apparatus for conducting recording/reproducing for an optical information recording medium, comprising:

an optical pickup apparatus comprising

a light source,
a coupling optical system to change a divergent angle of light flux emitted from the light source,
an objective lens optical system for converging the light flux having passed through the coupling optical system on a information recording surface of the optical information recording medium; and
a photo detector to detect the reflected light from the information recording surface of the optical information recording medium;

wherein the objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

**18.** A converging optical system used for an optical pickup apparatus for conducting recording/reproducing for an optical information recording medium, comprising:

a coupling optical system to change a divergent angle of light flux emitted from a light source; and
an objective lens optical system for converging the light flux having passed through the coupling optical system on a information recording surface of the optical information recording medium;
wherein the objective lens optical system comprises at least one lens made of a resin and having a positive refracting power, the coupling optical system comprises at least one lens made of a resin and having a positive refracting power and the coupling optical system further comprises an annular band-shaped diffractive surface having a negative diffracting power.

**19.** A coupling lens, comprising:

a lens made of a resin and having a positive refracting power, and
an annular band-shaped diffractive section having a negative diffractive power provide on at least one of surfaces of the lens.

**20.** The coupling lens of claim 19, wherein the following formula is satisfied,

$$0.12 < dr/f < 1.2$$

wherein dr is a diameter of the annular band-shaped diffractive section and f is a focal length of the lens.

**21.** The coupling lens of claim 19, wherein the coupling lens is a collimate lens.

# FIG. 1

# FIG. 2

# FIG. 3

**VARIATION AMOUNT OF COMPONENT OF SPHERICAL ABERRATION IN WAVEFRONT ABERRATION $\Delta W_t$**

UNIT
$\lambda$ rms

0.04

0.03

0.02

A

B

0.04    0.06    0.08    0.1

$1 / f_{cr} = \phi_{cr}$

# FIG. 4

# FIG. 5

# FIG. 6

# FIG. 7